# EUROPEAN PATENT APPLICATION

(11) **EP 2 468 113 A1**
(43) Date of publication of application: **27.06.2012**
(21) Application number: 10196264.5
(22) Date of filing: 21.12.2010
(51) Int. Cl.: A23L 3/00, A23L 3/3418, A23L 3/3436

(54) **Container for storage of foodstuff in a modified atmosphere, refrigerator in which such container is installed and method for controlling the atmosphere in such container**

(71) Applicant: WHIRLPOOL CORPORATION, Benton Harbor Michigan 49022 (US)
(72) Inventor: Biotti, Carolina, 21025, Comerio (IT); Monticelli, Enrica, 21025, Comerio (IT)
(74) Representative: Guerci, Alessandro

(57) **Abstract**

A container for storage of foodstuff in a modified atmosphere, comprising a source of gas adapted to increase the concentration of a first gas in the container, comprises means for putting the container into communication with scavenger means (22) for a second gas, the container being provided with a control unit adapted to drive the source of first gas and/or the means for putting the container into communication with scavenger means of the second gas depending on the type of foodstuff loaded in the container.

## Description

The present invention relates to a container for storage of foodstuff in a modified atmosphere, comprising a source of gas adapted to increase the concentration of this gas in the container, such gas being preferably carbon dioxide.

The invention relates also to a method for controlling the atmosphere in a container including a source of gas, preferably carbon dioxide.

GB 1076584 discloses a container for foodstuff subject to respiratory deterioration which can be supplied with carbon dioxide and oxygen form pressurized bottles.

During storage, even if at refrigerator temperature when the container is placed in a refrigerator compartment, food is subjected to quality decay due to chemical-biochemical reactions as well as microbial growth. According to food composition and physical-chemical properties different reactions could occur. As a consequence food items are no more appealing after few days of storage, the nutritional content is reduced and food safety could be compromised. Of course these events could be kept under control by storing each food items in the most suitable refrigerator area but not always this is enough.

Fresh fruits and vegetables are living tissue, although they are not longer attached to the plant. So that, once they are stored at refrigerator temperature surrounded by ambient atmosphere (21% oxygen concentration) they go on breathing even if slower than at room conditions. During storage the composition and physiology of fresh produce continue to change by means of different metabolic reactions. In particular, the ripening process is driven by degradation of complex insoluble carbohydrates to simple soluble sugar compounds (glucose, fructose) increasing the sweetness and loosing consistency. So, fresh produces continue to ripen and, finally, they begin to die (senescence). Despite bacteria growth is reduced by refrigerator temperature, the presence of oxygen could support the growth of aerobic micro organisms such as moulds and Pseudomonas. The presence of oxygen causes also the loss in chlorophyll and carotenoids and so food discolouration as well as vitamins oxidation.

Meat and fish are usually wrapped into film before being stored inside the refrigerator. Anyhow, they are surrounded by ambient air that is characterized by a significant amount of oxygen. Oxygen is the activator of oxidative reactions that affect fatty acids causing food discoloration and production of stale and rancid off-flavours as well as vitamins reducing the nutritional content. Lipid oxidation is even more critical when dealing with already cooked meat products. Ambient atmosphere is also an ideal environment for the growth of psychotropic food borne pathogen such as Salmonella, Pseudomonas and Yersinia.

As for dairy products, the presence of oxygen are subjected to lipolytic reactions that leads to the formation of soapy and rancid flavours in cheese and colour gets darker. The presence of oxygen, especially if temperature is no under control causes microbial growth, in particular the development of superficial moulds.

There are some known technologies in food industry that combined with refrigerated storage increase food preservation. Some of these technologies are focused on oxygen concentration reduction and different gas composition mixture. The use of such modified atmosphere is mainly based on the modification of gas partial pressures. In particular, it is an exclusion or significant reduction of oxygen combined with the increasing concentration of N₂ and CO₂ that is the active compound. Nitrogen is a pretty inert, it is a filler gas added to avoid the collapse that takes place when CO₂ dissolves into food matrix during storage. On the other hand, carbon dioxide is characterized by a strong bacteriostatic effect on micro organisms (special Gram -), presents an inhibitory effects on some enzymes and reduces produce respiration rate retarding the loss of nutritional compounds. The precise working mechanism is still largely unknown. Anyway it is related to its dissolution into food water and lipids. The links with food components are slowly reversible. The carbon dioxide concentration should be higher than 20% in order to have bacteriostatic effect and lower that 50% to avoid some problems about interaction with food. In fact, high carbon dioxide concentration could cause the pH decrease of product and change of food sensory quality (flavour, taste, texture and colour).

Each type of food requires a specific modified atmosphere according to their composition to prevent the decay during storage. In order to simplify the food management without compromising food preservation enhancement given by this technology, food items can be grouped into two main clusters: fruit and vegetables (10% Oxygen, 10% Carbon dioxide, and 80% Nitrogen), meat and fish, red meat and dairy products (30-40% Carbon dioxide, 70-60% Nitrogen). Fruits and vegetables, unlike the other food types, require a certain amount of oxygen into the compartment in order to avoid anaerobiosys leading to tissue acidification and damages.

There are different ways of generating modified atmosphere. In particular, gas mixture flushing, vacuum process followed by gas mixture flushing or active packaging solutions.

The above known solutions are not completely satisfactory from the point of view of an easy management of feeding of different gases in the container with a modified atmosphere. The use of bottles of carbon dioxide and oxygen with the related valves in a refrigerator increase the cost and the complexity of the appliance. On the other hand the use of an aperture in a container, which is controlled by a closure member actuated by drive means, is not sufficient for controlling in an efficient way the atmosphere in the container, even if such closure element is associated with an oxygen scavenger compound.

It is an object of the present invention to provide a container and a method for controlling the atmosphere therein which overcomes the above drawbacks and that is less complex and expensive if compared to the known solutions.

The above object is obtained thanks to the features listed in the appended claims.

The solution according to the invention is based on a synergic combination of different technologies in order to achieve in a refrigerator compartment the gas concentration combinations according to the food type to be stored, providing the customer with a flexible compartment to preserve any food longer. In particular, it is the combination of an active packaging solution defined as materials or articles in contact with food designed to actively maintain or improve the condition of the food (UE Regulation N°1935/2004) and controlled gas injection from a gas bottle. This solution is designed in order to avoid any total pressure variation without affecting compartment structure and reducing any safety issues for customer.

The container is designed in such way that once food has been loaded and the door closed, customer can activate from a control board the function of modified atmosphere. According to a preferred embodiment of the invention, two infrared sensors start the evaluation of the carbon dioxide and oxygen concentrations and activate simultaneously two working mechanisms: a closure element covering oxygen scavenger sachet opens and a solenoid valve acts in order to allow the access of carbon dioxide gas from the cylinder. The gas injection flow rate is preferably set in order to follow the sachet absorption kinetic keeping constant the total pressure inside the compartment.

Further details and advantages of a container according to the present invention will be clear from the detailed following description, with reference to the attached drawings in which:
- figure 1 is a schematic side cross sectional view of a refrigerator in which a container according to the invention is placed;
- figure 2 is a front view of the container of figure 1;
- figure 3 is a diagram showing the oxygen concentration vs. time in a container according to the invention;
- figure 4 is a diagram showing the mould formation on hard cheese surface stored in a traditional container placed in a refrigerator compared to the mould formation in the container according to the present invention, and
- figure 5 is a schematic view of temperature and gases concentration control algorithm use for a container according to the invention installed in a refrigerator.

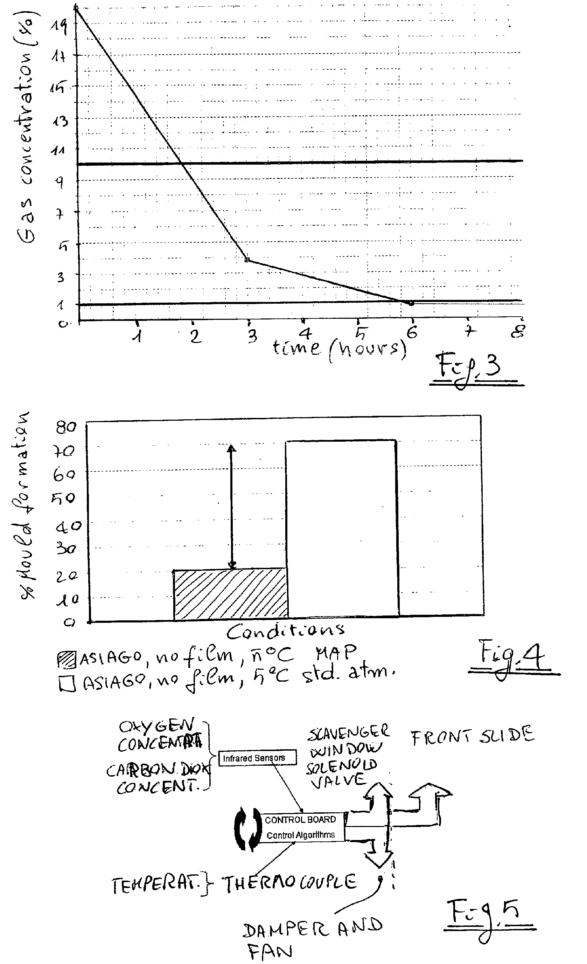

With reference to the drawings, with 10 it is indicated a refrigerator having a fresh food cavity 12 and a freezer cavity 14. In the fresh food cavity 12 a container 16 is placed which has a front door 16a and an upper wall 16b provided with an aperture 18. Such aperture 18 may be opened or closed with a damper 20 or any similar device, for instance as disclosed by EP 1055089. Facing the aperture there is a box 22 containing an oxygen scavenger substance. The activity of the oxygen scavenger is therefore controlled by the damper 20 and it is time driver for the creation of the modified atmosphere. The composition and quantity of the oxygen scavenger compound is selected in order to reduce the oxygen concentration from 21% to 10% (in case of fruit and vegetables) in about 2 hours and from 21% to 1% (in case of meat and fish or dairy products) in about 6 hours. In the graph of figure 3 it is presented the oxygen time reduction using 20g iron-based scavenger for an airtight container 16 having a volume of five litres. The oxygen concentration achieved after a fix time, for instance 6 hours, is an indication of the degree of saturation of the scavenger itself. So that, if after such time the oxygen concentration in the compartment measured by an oxygen sensor 24 is higher than the set threshold, an alarm on user interface 26 will advice customer to replace the device. The container 16 contains a carbon dioxide bottle 28 which has a solenoid release valve 30 driven by the control unit 26a associated with the user interface 26. The same logic used for the oxygen scavenger replacement could be applied to the carbon dioxide gas bottle 28; a carbon dioxide sensor 32 can detect carbon dioxide concentration lower than the threshold and in this case an alarm on the user interface 26 will advice the customer to replace the gas bottle.

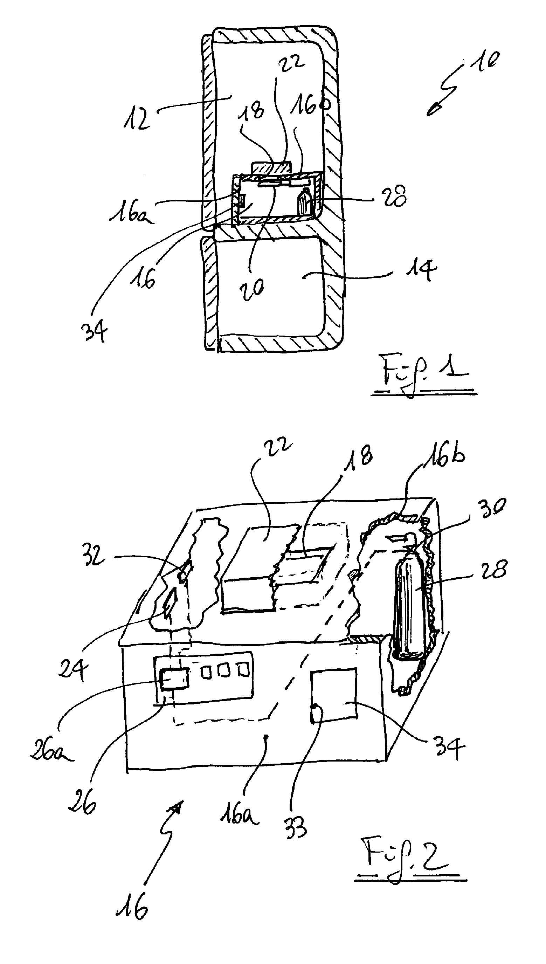

Once the ideal gas composition has been reached, the sensor feedback generates a signal to the control unit 26a and the damper 20 closes down as well as the solenoid valve 30. Tests carried out by the applicant have shown that an improvement in shelf life for fruit and vegetables is obtained when the modified atmosphere in the container 16 contains from 6% to 14% of oxygen and from 6% to 14% of carbon dioxide. For meat and fish, red meat and dairy products a good improvement of shelf life has been obtained with an oxygen concentration lower than 5% and with a carbon dioxide concentration comprised between 30% and 40%. The container or compartment 16 should be designed in order to be airtight. An container made of ABS resin and with a EDPM gasket has been tested by the applicant and it is capable to keep gas drawing out lower than 25000cm3/m2 24h bar; this has proved to be a good compromise between robustness and gas permeability. The design of the container 16 has to take into consideration the space required for the gas bottle location and well as the sensors 24 and 32. All the electronics and cables for the sensors are located into the compartment door 16a, while the top 16b is characterized by the cut 18 to insert the scavenger holder 22. Even if for clarity reason the scavenger holder 22 is shown in figures 1 and 2 as placed on the top wall 16b of the container, it can be placed within the aperture 18 or within the container as well. During the storage, depending on such sealing, the oxygen absorption or carbon dioxide emission could be required. Modified atmosphere creation and its control over time are achieved by means of different technologies-consumables. Anyhow, depending on the needs, just one of the two could be activated.

The same functioning logic could be delivered without positioning a sensor in the compartment. In fact, on the basis of experiments, a routine algorithm can be designed to set at the beginning the target atmosphere and to adjust periodically the gases concentration in relation to the stored food type.

The effect of oxygen reduction and carbon dioxide increase on the preservation of animal origin food such as hard cheese has been evaluated by the applicant. On figure 4 it is shown and the result for the reduction of mould reduction on hard cheese surface stored in a 5°C container characterized by a modified atmosphere containing 5% **O₂,** 15% CO₂ and 80% N₂ after 10 days of storage compared to one traditionally preserved. The reduction of mould is of the order of 50%.

As food is a living element, in particular fruits and vegetables, modified atmosphere delays respiration but it could anyhow occur. The sensors 24 and 32 always monitor the gas composition and when, due to respiration, a significant oxygen concentration reduction (lower than 5%) and consequent carbon dioxide increase are detected, an opening 33 controlled by a slide 34 present on the front door 16a of the compartment 16 is opened putting into communication the container 16 with the external refrigerator cavity 12. In this way, the oxygen content increases and the carbon dioxide concentration decreases avoiding food tissues acidification and consequent spoilage. The device for opening/closing the slide 34 can be identical to the damper 20 used for opening/closing the aperture 18 on the top wall 16b of the container 16. For sure, the opening time should be controlled in order to be consistent with the fruits and vegetable modified atmosphere required composition. In case carbon dioxide level is below the threshold (10%), the solenoid valve 30 is activated to allow gas concentration achieve the target value.

This is an alternative way the sensor and the algorithm could address the modification of the internal atmosphere and, as said, is dedicated only to fresh produces.

The container 16 can be designed in order to be directly integrated into the refrigerator cavity 12 or hanged at the inner-door. As for the integrated compartment, it could be in communication with the product cooling system, for instance with a back-wall (not shown) in which cooled air is circulated, allowing customer to manage temperature settings in relation to food type stored.

In this way, the food selection on user interface 26 of the container 16 drives not only the specific functioning of the solenoid valve 30 and scavenger damper 20 to control gas concentration but also a damper and a fan to manage temperature, as schematically shown in figure 5. The temperature management could be run considering two different control options depending on the type of relation between the modified atmosphere and temperature controls, in parallel or in series.

In a first option, a fan will suck air from the evaporator either in the refrigerator or in the freezer compartment and cool down the compartment back-wall (air-plenum) on the basis of the algorithm properly designed for the specific food and the feedback given by the sensors. If the selection is meat and fish, in this case, the fan works in order to achieve temperature close to 0°C while the scavenger 22 reduces the oxygen concentration close to 0% and the gas bottle 28 increases the carbon dioxide level accordingly (30-40%). Temperature control could be also independently managed by means of eutectics.

In the second option, the fan will suck air from the evaporator either in the refrigerator or in the freezer compartment and directly send it into the compartment 16; later on, a gas concentration adjustment will occur. If the selection is meat and fish, the fan works in order to achieve a temperature close to 0°C and when the temperature level is achieved, the control for the modified atmosphere will be activated. The scavenger and the gas bottle work to achieve oxygen concentration equal or lower than 1% and carbon dioxide concentration equal or higher than 30%. Every time a temperature adjustment is required, for instance after defrost, the control algorithm for the modified atmosphere follows. Moreover, in this case, a direct humidity control system could be eventually integrated in the refrigerator control system.

When food is loaded in the container 16 (door 16a open) or when air is drawn through the gasket of door 16a, the oxygen concentration is higher than the maximum set threshold (1% for meat and fish or dairy products and 10% for fruits and vegetables), so that the control is activated automatically. A motor activates the damper 20 (scavenger window) on the top of the compartment 16 and the scavenger 22 is exposed to the compartment air till when the desired oxygen level is achieved. At the same time, the solenoid valve 30 is opened and the amount of gas injected in time is set on oxygen scavenger kinetic.

When fruit and vegetables are placed in the container 16, there is also the need of modifying atmosphere as a consequence of food respiration. When oxygen concentration is lower than the minimum threshold set for fruit and vegetables (5%), the control is activated. A motor activates the front slide 34 and the air coming from the refrigerator cavity 12 will bring oxygen inside. At the same time, also carbon dioxide content will decrease. When the oxygen level achieves the optimum value (10%) the slide 34 is closed and eventually, in case carbon dioxide level is below the threshold (10%), the solenoid valve 30 is activated to allow gas concentration achieve the target value.

When temperature in the container 16 is lower than the maximum set threshold (for instance, 1,5°C for meat and fish), the temperature control is activated and the fan (and also a damper, in case it is used in the cool air delivery system) works in order to bring cold air in the air plenum of the container 16 or directly into the container 16, consequently cooling down the container. At the same time of afterwards (in case the air plenum is not used), gas sensors 24 and 32 verify the gases concentration and eventually activate the scavenger damper 20 as well as the gas bottle solenoid valve 30.

## Claims

1. Container (16) for storage of foodstuff in a modified atmosphere, comprising a source (28) of gas adapted to increase the concentration of a first gas in the container, **characterized in that** it comprises means (18, 20) for putting the container (16) into communication with second gas scavenger means (22), the container (16) being provided with a control unit (26a) adapted to drive the source (28) of first gas and/or the means for putting the container (16) into communication with second gas scavenger means (22) depending on the type of foodstuff loaded in the container (16).

2. Container according to claim 1, wherein the first gas is carbon dioxide and the second gas is oxygen.

3. Container according to claim 1 or 2, wherein the container (16) is provided with an auxiliary opening (33) adapted to put the container (16) into communication with the atmosphere outside the container, such auxiliary opening (33) being controlled by the control unit (26a).

4. Container according to claim 2 or 3, wherein it comprises sensors (24, 32) for detecting the concentration of carbon dioxide and oxygen in the container (16) and for providing signals to the control unit (26a).

5. Container according to any preceding claims, wherein it comprises a user interface (26) through which the user can set the category of food to be stored in the container (16), such category being linked to specific threshold of carbon dioxide and oxygen concentration.

6. Refrigerator comprising a compartment (12) in which a container (16) according to any of the preceding claims is placed.

7. Refrigerator according to claim 6, wherein the control unit (26a) of the container (16) is part of or connected to a control unit of the refrigerator so that a predetermined temperature is maintained in the container (16) depending on the category of food stored in said container.

8. Refrigerator according to claim 6 or 7, wherein when the food contained in the container (16) is fruit or vegetables, the modified atmosphere in the container (16) contains from 6% to 14% of oxygen and from 6% to 14% of carbon dioxide, while when the food is meat, fish or dairy products, the modified atmosphere in the container (16) contains less than 5% of oxygen and from 30% to 40% of carbon dioxide.

9. Method for controlling the atmosphere in a container (16) fro storing foodstuff, particularly in a container placed in a cavity (12) of a refrigerator (10), comprising the step of feeding carbon dioxide in such container to a predetermined concentration depending on the foodstuff contained therein, **characterized in that** it further comprises the step of opening/closing an aperture (18) towards an oxygen scavenger compound (22) in order to reduce the concentration of oxygen in the container (16).

10. Method according to claim 9, wherein it comprises the step of detecting the concentration of carbon dioxide and oxygen and adjusting the feeding of carbon dioxide and the opening/closing of the aperture (18) towards the oxygen scavenger according to the detected concentration.

11. Method according to claim 9 or 10, wherein it comprises a further step of opening/closing an auxiliary aperture (33) of the container (16) for putting the inside of said container into communication with the ambient outside the container.
